# EUROPEAN PATENT APPLICATION

(11) **EP 2 093 658 A2**
(43) Date of publication of application: **26.08.2009**
(21) Application number: 09153451.1
(22) Date of filing: 23.02.2009
(51) Int. Cl.: G06F 3/12

(54) **Printing control system, printing request terminal, printer, printing control program, and printing control method**

(30) Priority: 25.02.2008 JP 2008042526; 22.10.2008 JP 2008271735
(71) Applicant: Seiko Epson Corporation, Shinjuku-ku Tokyo (JP)
(72) Inventor: Murai, Kiyoaki, Suwa-shi Nagano 392-8502 (JP)
(74) Representative: Cloughley, Peter Andrew

(57) **Abstract**

A printing control system controlling a printer performing a printing operation by ejecting a plurality of inks including a specific color ink or special ink is disclosed. The printing control system includes: an ejection order specifying section specifying an order of ejecting the ink when the plurality of inks including the specific color ink or the special ink is ejected to perform the printing operation; a print data generating section generating print data for controlling the ejection of the inks of every rank on the basis of the order specified by the ejection order specifying section; and a printing control section allowing the plurality of inks to be ejected in the order specified by the ejection order specifying section by sequentially controlling the printer on the basis of the print data sequentially acquired from the first rank among the print data of all the ranks generated by the print data generating section.

## Description

The present invention relates to a system, program, and method of controlling a printer performing a printing operation by ejecting plural ink, and more particularly, to a printing control system, a printing request terminal, a printer, a printing control program, and a printing control method, which are suitable for diverse expression of prints.

There was known a technique of assigning specific color ink to colors of pixels specified in an operating system (OS) when plural ink including specific color ink is ejected to perform a printing operation (JP-A-10-309834).

However, in the technique described in JP-A-10-309834, since the specific color ink could be assigned but the order of ejecting ink to a single pixel could not be specified, there is a problem that the expression of prints is limited.

An advantage of some aspects of the invention is that it provides a printing control system, a printing request terminal, a printer, a printing control program, and a printing control method, which are suitable for diverse expression of prints.

According to an aspect of the invention, there is provided a printing control system controlling a printer performing a printing operation by ejecting a plurality of ink including specific color ink or special ink, the printing control system including: an ejection order specifying section specifying an order of ejecting the ink when the plurality of ink including the specific color ink or the special ink is ejected to perform the printing operation; a print data generating section generating print data for controlling the ejection of the ink every rank on the basis of the order specified by the ejection order specifying section; and a printing control section allowing the plurality of ink to be ejected in the order specified by the ejection order specifying section by sequentially controlling the printer on the basis of the print data sequentially acquired from the first rank among the print data of all the ranks generated by the print data generating section.

According to this configuration, when the ejection order is specified by the ejection order specifying section, print data is generated every rank on the basis of the specified order by the print data generating section. The printing control section sequentially controls the printer to eject the plurality of ink in the specified order on the basis of the print data sequentially acquired from the first rank among the generated print data of all the ranks.

Accordingly, a case of first ejecting first ink and then ejecting specific color ink or special ink thereon and a case of ejecting the ink in the opposite order can be embodied, thereby accomplishing more diverse expression of prints.

Here, the specific color ink means ink having a color between one color of primary colors (for example, CMYK) and another color of the primary colors. The specific color ink includes, for example, ink of red, green, violet, orange, and blue when the primary colors are CMYK. The ink obtained by combining the primary color ink at a certain ratio in advance to surely express a specific color is also included in the specific color ink. For example, when a corporate color of a company is printed by combination of primary color inks, the corporate color is varied every printing and thus the corporate color cannot be printed in a desired color. In this case, the specific color ink prepared in advance in the corporate color can be usefully used.

The special ink means ink giving texture or gloss different from the primary color (for example, CMYK) ink. The special ink includes, for example, metallic color (for example, metallic, gold, and silver) ink, transparent color or white ink, fluorescent ink, pearl ink, opaque ink, magnetic ink, modulation ink modulating and reflecting light having a predetermined wavelength, glossy or glossless colorless ink, colorless transparent (for example, aqueous or oily) ink for expressing a soaking effect, and water when the primary colors are CMYK.

The printing control system may further include a printing request terminal requesting the printer for performing a printing operation and the printing request terminal may have a program allowing the printing request terminal to perform the function of the ejection order specifying section.

According to this configuration, the printing request terminal can specify the ejection order by the use of an application.

The printing control system may further include an ejection rank information storing section storing ejection rank information indicating a rank for ejecting a predetermined ink of the plurality of ink and the ejection order specifying section may specify the ink ejection order on the basis of the ejection rank information stored in the ejection rank information storing section.

According to this configuration, the ejection order is specified on the basis of the ejection rank information by the ejection order specifying section.

Here, the ejection rank information storing section stores the ejection rank information by the use of all the means and at all times and may store the ejection rank information in advance, or may store the ejection rank information by an input from the outside at the time of operation of the system without storing the ejection rank information in advance.

In the above-mentioned printing control system, the ejection order specifying section may specify the order of ejecting the plurality of ink on the basis of drawing elements to be printed.

According to this configuration, it is possible to specify the order of ejecting the plurality of ink by specifying the order of the drawing elements to be printed.

In the above-mentioned printing control system, the ejection order specifying section may specify the order of ejecting the plurality of ink on the basis of drawing layers used for printing.

According to this configuration, it is possible to specify the order of ejecting the plurality of ink by specifying the order of the drawing layers used for printing.

According to another aspect of the invention, there is provided a printing request terminal requesting a printer for performing a printing operation, the printing request terminal including: an ejection order specifying section specifying an order of ejecting a plurality of ink when the printer performs a printing operation by ejecting the plurality of ink including specific color ink or special ink; a print data generating section generating print data for controlling the ejection of the plurality of ink every rank on the basis of the order specified by the ejection order specifying section; and a print data transmitting section transmitting the print data generated by the print data generating section to the printer.

According to this configuration, when the ejection order is specified by the ejection order specifying section, the print data is generated every rank on the basis of the specified order by the print data generating section of the printing request terminal. The print data sequentially acquired from the first rank among the generated print data of all the ranks is sequentially transmitted to the printer by the print data transmitting section.

According to another aspect of the invention, there is provided a printer performing a printing operation in response to a print request from a printing request terminal, the printer including: a printing section performing a printing operation by ejecting a plurality of ink; a print data receiving section receiving print data from the printing request terminal; and a printing control section controlling the printing section to eject the plurality of ink in a predetermined order on the basis of the print data received by the print data receiving section. Here, the print data serves to control the ejection of the plurality of ink every rank on the basis of the specification of the order of ejecting the plurality of ink.

According to this configuration, when the print data is received by the print data receiving section, the printing control section of the printer controls the printing section on the basis of the sequentially-received print data to eject the plurality of ink in the specified order.

According to another aspect of the invention, there is provided a printing control method of controlling a printer performing a printing operation by ejecting a plurality of ink including specific color ink or special ink, the printing control method including: specifying an order of ejecting the ink when the plurality of ink including the specific color ink or the special ink is ejected to perform the printing operation; generating print data for controlling the ejection of the ink every rank on the basis of the specified order; and ejecting the plurality of ink in the specified order by sequentially controlling the printer on the basis of the print data sequentially acquired from the first rank among the generated print data of all the ranks.

According to another aspect of the invention, there is provided a printing control program controlling a printer performing a printing operation by ejecting a plurality of ink including specific color ink or special ink, the printing control program allowing a computer to execute a process including: specifying an order of ejecting the ink when the plurality of ink including the specific color ink or the special ink is ejected to perform the printing operation; generating print data for controlling the ejection of the ink every rank on the basis of the specified order; and ejecting the plurality of ink in the specified order by sequentially controlling the printer on the basis of the print data sequentially acquired from the first rank among the generated print data of all the ranks.

According to another aspect of the invention, there is provided a printing control system controlling a printer performing a printing operation by ejecting a plurality of recording materials, the printing control system including: an ejection order specifying section specifying an order of ejecting the recording materials at the time of performing a printing operation by ejecting the plurality of recording materials; and a printing control section controlling the printer to eject the plurality of recording materials in the order specified by the ejection order specifying section on the basis of the order specified by the ejection order specifying section.

According to this configuration, when the ejection order is specified by the ejection order specifying section, the printing control section controls the printer on the basis of the specified order to eject the plurality of recording materials in the specified order.

Accordingly, a case of first ejecting a first recording material and then a second recording material thereon and a case of ejecting the recording materials in the opposite order can be embodied, thereby accomplishing more diverse expression of prints.

Here, the recording material means a material that can allow information such as characters or images to be printed on a printing medium such as a sheet of paper. The recording material includes, for example, ink and toner. An example of the ink includes water causing the soaking effect, in addition to primary color (for example, CMYK) ink, specific color ink, and special ink.

Embodiments of the invention will now be described by way of example only with reference to the accompanying drawings, wherein like numbers reference like elements.

Fig. 1 is a block diagram illustrating a hardware configuration of a printing system.

Fig. 2 is a block diagram functionally illustrating an example of a control process of the printing system.

Fig. 3 is a flowchart illustrating a process of specifying an order of ejecting ink.

Fig. 4 is a flowchart illustrating another process of specifying the order of ejecting ink.

Fig. 5 is a diagram illustrating an example of a data structure of drawing data.

Fig. 6 is a flowchart illustrating a bit map data generating process.

Fig. 7 is a flowchart illustrating a print data generating process.

Fig. 8 is a flowchart illustrating a printing control process.

Fig. 9 is a diagram illustrating a case where a rectangle is first drawn and a circle is drawn thereon.

Figs. 10A, 10B, and 10C are diagrams illustrating data structures of a bit map storage area and a drawing parameter storage area.

Fig. 11 is a diagram illustrating a printing order.

Fig. 12 is a diagram illustrating a printing result.

Figs. 13A and 13B are diagrams illustrating a difference in expression of prints.

Fig. 14 is a diagram illustrating a case where a circle is first drawn and then a rectangle is drawn thereon.

Figs. 15A, 15B, and 15C are diagrams illustrating data structures of the bit map storage area and the drawing parameter storage area.

Fig. 16 is a diagram illustrating a printing result.

Fig. 17 is a diagram illustrating a case where the rectangle other than the circle portion is first drawn and then the circle is drawn thereon.

Fig. 18 is a diagram illustrating a case where the circle is first drawn and then the rectangle other than the circle portion is drawn thereon.

Fig. 19 is a diagram illustrating a printing order.

Fig. 20 is a diagram illustrating a table in which ranks for ejecting ink are defined.

### First Embodiment

Hereinafter, a first embodiment of the invention will be described in detail with reference to the accompanying drawings.

### A. Configuration of Print System

A configuration of a printing system to which the invention is applied will be described now.

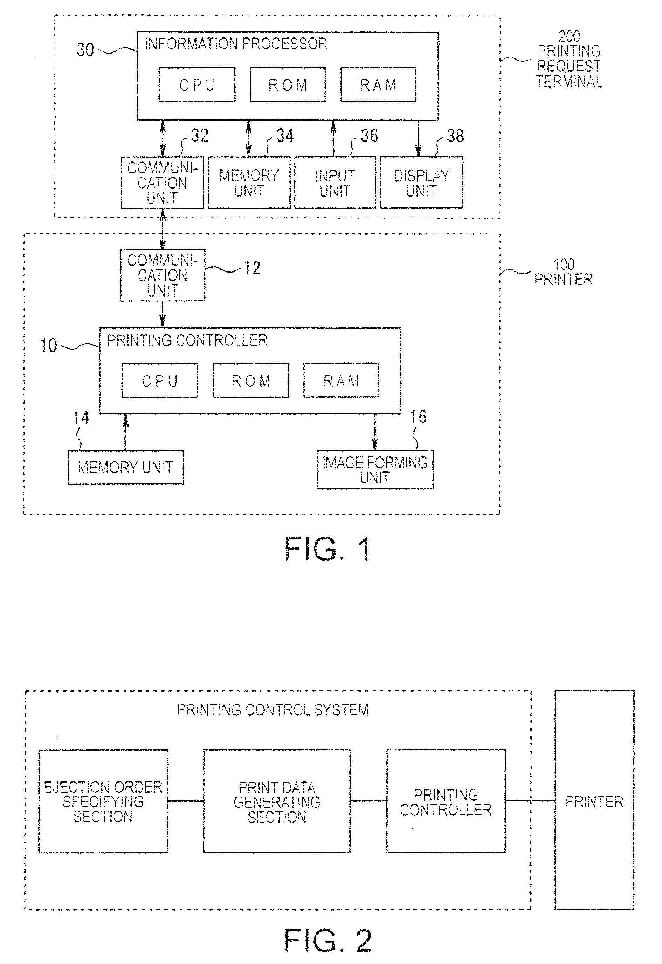

Fig. 1 is a block diagram illustrating a hardware configuration of a printing system.

In Fig. 1, a printer 100 and a printing request terminal 200 requesting the printer 100 for performing a printing operation are connected to each other through a communication cable so as to communicate with each other.

The printer 100 includes a printing controller 10 controlling a printing operation, a communication unit 12 transmitting and receiving data to and from the printing request terminal 200, a memory unit 14 including an HD that can store data or tables as files, and an image forming unit 16 forming an image on a printing sheet.

The printing controller 10 includes a CPU performing a computing operation and controlling the entire system on the basis of a control program, a ROM storing the control program and the like of the CPU in a predetermined area in advance, a RAM storing data read from the ROM or the computation result necessary for the computing operation of the CPU, and an interface (I/F) interfacing the input and output of data with the communication unit 12 and the like. These elements are all connected to each other through a bus, which is a signal line for transmitting data, so as to transmit and receive data.

The image forming unit 16 includes a transport roller transporting printing sheets and a carriage reciprocating in a direction perpendicular to a transport direction of the printing sheets. The carriage monolithically includes a cartridge holder to which and from which ink cartridges of primary color ink of CMYK, specific color ink, and special ink can be mounted and demounted and a print head forming dots on the printing sheet by receiving the supply of ink from the cartridge holder and ejecting minute ink from nozzles. When an image is formed on a printing sheet, the printing sheet is made to move by a predetermined distance by the transport roller every reciprocation of the carriage under the control of the printing controller 10 and dots of one of the ink colors and size thereof are controlled every minimum movement in the moving direction of the print head and in the transport direction of the transport roller.

The printing request terminal 200 includes an information processor 30 processing information, a communication unit 32 transmitting and receiving data to and from the printer 100, a memory unit 34 having an HD that can store data or table as files, an input unit 36 having a keyboard or a mouse that can input data as a human interface, and a display unit 38 displaying an image on the basis of image signals.

The information processor 30 has a configuration in which a CPU, a ROM, a RAM, and an I/F are connected to each other through a bus, similarly to the printing controller 10.

The memory unit 34 stores drawing data prepared by a drawing application executed by the printing request terminal 200.

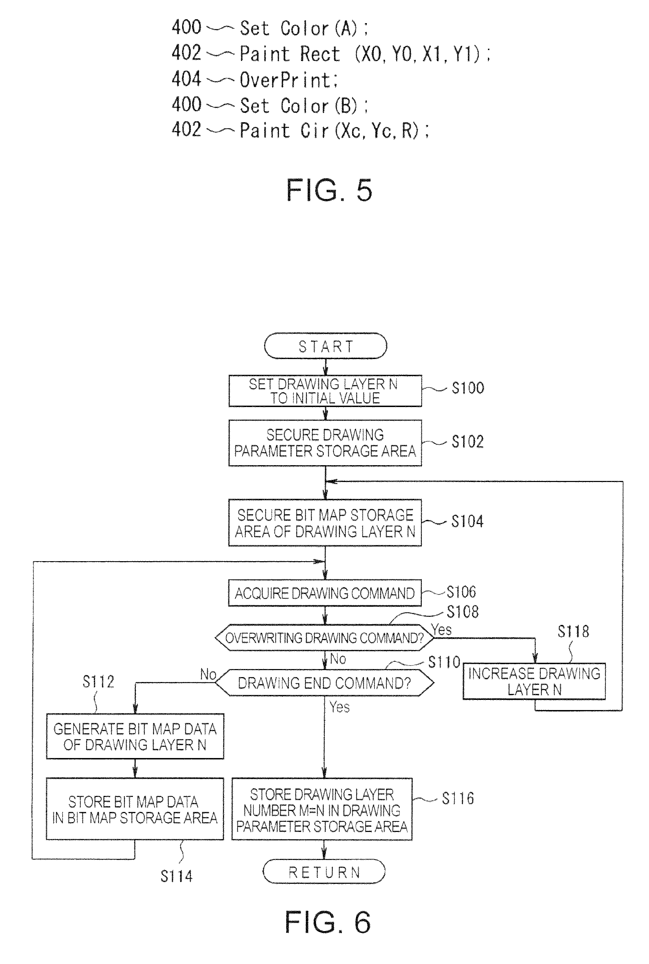

In the drawing application, for example, drawing data shown in Fig. 5 is generated by allowing an operator (user) to operate the input unit 36 while viewing a display screen on the display unit 38 as described later.

That is, in the drawing application, an order of ejecting ink can be specified by specifying at what rank the ink corresponding to a color of each drawing element such as a figure should be ejected, and the drawing data having the specified order defined therein is stored in the memory unit 34.

Here, the drawing element (object) means an element based on drawing commands such as a rectangle drawing command, a circle drawing command, and an image data drawing command.

The order of ejecting the ink can be specified in the unit of drawing element, or may be specified in the unit of plural drawing elements.

In the printing system to which the invention is applied and which is shown in Fig. 1, various processes or control to be described later are performed in accordance with the program stored in the ROM by the CPU of the printing controller 10 of the printer 100 or in accordance with the program stored in the ROM by the CPU of the information processor 30 of the printing request terminal 200. Accordingly, an example of the process or control in the printing system to which the invention is applied and which is shown in Fig. 1 can be functionally expressed as shown in Fig. 2.

Here, an ejection order specifying section shown in Fig. 2 corresponds to the input unit 36, the display unit 38, and the information processor 30 of the printing request terminal 200 shown in Fig. 1. A print data generating section shown in Fig. 2 corresponds to the information processor 30 of the printing request terminal 200 shown in Fig. 1. A printing control section shown in Fig. 2 corresponds to the printing controller 10 of the printer 100 shown in Fig. 1. Accordingly, it will be apparent that at least the printing control section in Fig. 2 may be disposed in either the printing request terminal 200 or the printer 100. Moreover, other arrangements or combinations are possible, including a unified printer and printing request terminal.

B. Generation of Drawing Data

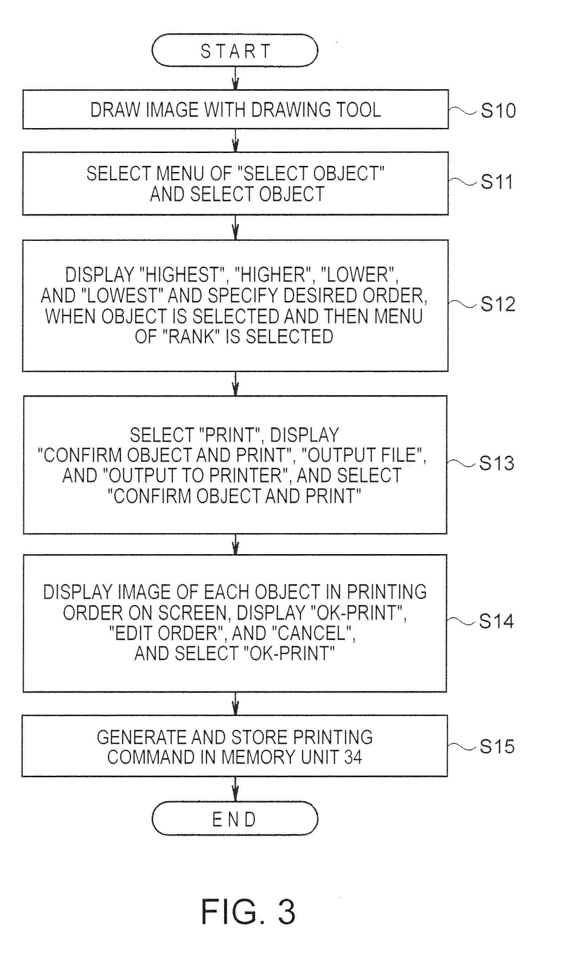

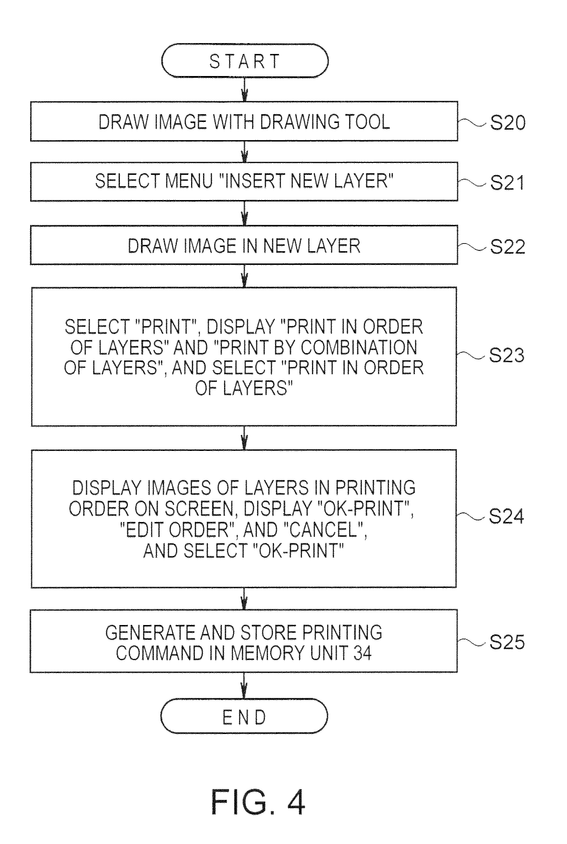

The process of specifying an order of ejecting ink to correspond to the colors of the drawing elements in the printing request terminal 200 will be described now with reference to Figs. 3 and 4.

The CPU of the information processor 30 starts up a predetermined program stored in a predetermined area of the ROM and performs the processes shown in the flowcharts of Figs. 3 and 4 in accordance with the program.

Fig. 3 shows an example where an operator draws an image and then specifies an ink ejection order in the unit of object by the use of the input unit 36 and the display unit 38.

In this case, in step S10, the operator draws an image by the use of a drawing tool and the input unit 36 while viewing the display screen on the display unit 38. For example, color A is selected to draw a rectangle and color B is selected to draw a circle.

In step S11, a menu of "select object" is selected and an object the ink ejection order of which is specified is selected by the use of the input unit 36. For example, the circle is selected.

In step S12, when the object is selected and a "rank menu" is then selected, "highest", "higher", "lower", and "lowest" are displayed on the display screen. Accordingly, the operator specifies a desired rank by the use of the input unit 36. For example, the "lowest" is selected.

In step S13, when "print" is selected, "confirm object and print", "output file", and "print out" are displayed on the display screen. In this case, the "confirm object and print" is selected by the use of the input unit 36.

In step S14, images of the objects are displayed in the printing order on the display screen and "OK-print", "edit order", and "cancel" are displayed on the display screen. In this case, the "OK-print" is selected by the use of the input unit 36.

In step S15, a printing command (drawing command) shown in Fig. 5 is generated on the basis of the above-mentioned processes and the generated printing command is stored in the memory unit 34.

The ink ejecting order and the time interval are specified in the unit of object, but the objects the ink ejecting order of which is specified may be drawing layers.

Fig. 4 shows an example where an operator draws an image by drawing layers and specifies the ink ejecting order in the unit of layer by the use of the input unit 36 and the display unit 38.

In this case, in step S20, the operator draws an image by the use of the drawing tool and the input unit 36 while viewing the display screen of the display unit 38. For example, color A is selected to draw a rectangle.

In step S21, a menu of "insert new layer" is selected. Accordingly, a new layer is generated for drawing.

In step S22, an image is drawn in the new layer. For example, color B is selected to draw a circle.

In step S23, when "print" is selected, "print in the order of layers" and "print by combination of layers" are displayed on the display screen and the "print in the order of layers" is selected.

In step S24, images of the drawing layers are displayed in the order to be printed on the display screen and "OK-print", "edit order", and "cancel" are displayed on the display screen. The "OK-print" is selected here.

In step S25, the printing command (drawing command) shown in Fig. 5 is generated on the basis of the above-mentioned processes and the generated printing command is stored in the memory unit 34.

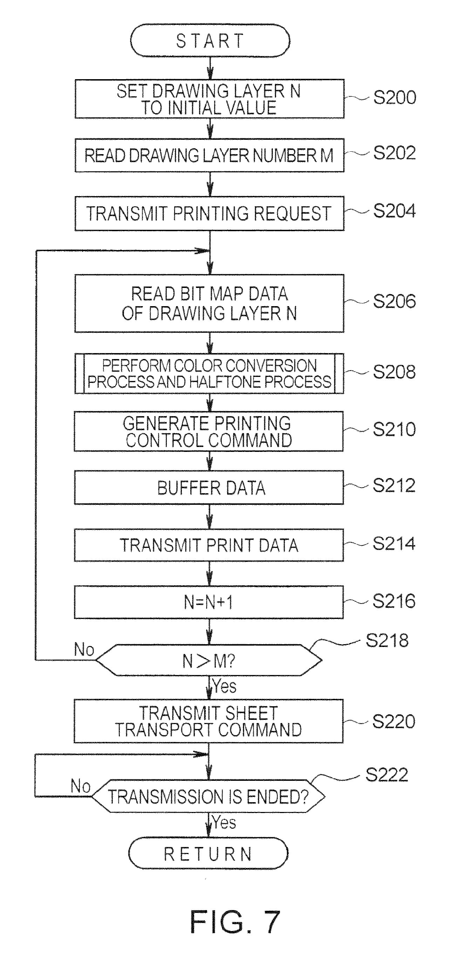

In step S15 or S25, the generated printing command is stored in the memory unit 34, but the printing command may be transmitted to the printer 100 instead. However, in this case, a bit map data generating process shown in Fig. 6 and described later and a print data generating process shown in Fig. 7 and described later, which are based on the printing command, are carried out by the printer 100.

Fig. 5 is a diagram illustrating an example of a data structure of the drawing data.

As shown in Fig. 5, the drawing data includes a drawing command 400 for specifying colors of drawing elements, a drawing command 402 for drawing the drawing elements, a drawing command (overwriting drawing command) 404 for instructing to overwrite the drawing elements, and a drawing command (not shown) for instructing a drawing end. In the example shown in Fig. 5, a rectangle specified by coordinates (X0, Y0, X1, Y1) is drawn with color A and a circle specified by coordinates (Xc, Yc, R) is overwritten thereon with color B. In this case, ink (hereinafter, referred to as ink A) corresponding to color A is ejected to the portion where the rectangle of color A and the circle of color B overlaps with each other and then ink (hereinafter, referred to as ink B) corresponding to color B is ejected thereon.

### C. Processes of Printing Request Terminal

Processes performed by the printing request terminal 200 will be described now.

The CPU of the information processor 30 includes a micro processing unit or the like, starts up a predetermined program stored in a predetermined area of the ROM, and performs the bit map data generating process and the print data generating process shown in the flowcharts of Figs. 3 and 4 in accordance with the program.

### C-1 Bit Map Data Generating Process

The bit map data generating process will be described now.

Fig. 6 is a flowchart illustrating the bit map data generating process.

When the bit map data generating process is performed by the CPU of the information processor 30, as shown in Fig. 6, the process of step S100 is first performed.

In step S100, a drawing layer N as a variable is set to "1" as an initial value.

Here, in this embodiment, since an image is divided into plural layers and then printed, one of the plural layers is the drawing layer.

Accordingly, the drawing layer means a layer in which the drawing elements to be printed at a time are grouped. The drawing elements can be overlapped and printed by arranging the drawing elements, the coordinates of which overlap with each other, in the plural drawing layers. Therefore, the ink ejecting order can be changed in the overlapping portion of the drawing elements, depending on the drawing layers and the drawing elements disposed in the drawing layers.

A drawing parameter storage area is secured in the RAM in step S102 and a bit map storage area storing bit map data of the drawing layer N is secured in the RAM in step S104. Then, the drawing command is acquired from the drawing data stored in the memory unit 34 in step S106 and then the process of step S108 is performed.

In step S108, it is determined whether the acquired drawing command is a drawing command (overwriting drawing command) instructing to overwrite the drawing element (see Fig. 5). When it is determined that the acquired drawing command is not the overwriting drawing command (NO), the process of step S110 is performed.

In step S110, it is determined whether the acquired drawing command is the drawing command (drawing end command) instructing to end the drawing. When it is determined that the acquired drawing command is not the drawing end command (NO), the process of step S112 is performed.

The bit map data of the drawing layer N is generated on the basis of the acquired drawing command in step S112, the generated bit map data is stored in the bit map storage area in step S114, and then the process of step S106 is performed.

On the other hand, when it is determined in step S110 that the acquired drawing command is the drawing end command (YES), the process of step S116 is performed. That is, the drawing layer number M as a variable is set to the drawing layer N, the drawing layer number M is stored in the drawing parameter storage area, a series of processes are ended, and the original process is performed again.

On the other hand, when it is determined in step S108 that the acquired drawing command is the overwriting drawing command (YES), "1" is added to the drawing layer N in step S118 and then the process of step S104 is performed.

### C-2 Print Data Generating Process

The print data generating process will be described now.

Fig. 7 is a flowchart illustrating the print data generating process.

The print data generating process is performed subsequently to the bit map data generating process. When the process is performed by the CPU of the information processor 30, the process of step S200 is first performed as shown in Fig. 7.

The drawing layer N is set to "1" as the initial value in step S200, the drawing layer number M is read from the drawing parameter storage area in step S202, and then the process of step S204 is performed.

A printing request is transmitted to the printer 100 through the communication unit 32 in step S204, the bit map data of the drawing layer N is read from the bit map storage area in step S206, and then the process of step S208 is performed.

In step S208, a color conversion process and a halftone process are performed on the read bit map data to generate binary data. The binary data is data indicating a printing image in which plural pixels are arranged in the horizontal direction and the vertical direction to correspond to the moving direction of the print head and the transport direction of the transport roller and is data indicating that a dot is not formed in the respective pixels or indicating one of the ink colors and the dot size when the dots are formed.

Then, in step S21 0, a printing control command is generated on the basis of the generated binary data. The printing control command is a command for controlling the printer 100 to form an image of the drawing layer N and examples thereof include a color setting command for setting a color of a pixel, a position control command for controlling the position of the print head or the printing sheet, a printing command for ejecting ink, and a sheet transport command for discharging the printing sheet.

The generated printing control command is buffered as the print data in the memory unit 34 in step S212, the print data buffered in the memory unit 34 is transmitted to the printer 100 through the communication unit 32 in step S214, and then the process of step S216 is performed.

"1" is added to the drawing layer N in step S216 and it is then determined in step S218 whether the drawing layer N is greater than the drawing layer number M. When it is determined that the drawing layer is greater than the drawing layer number M (YES), the process of step S220 is performed.

The sheet transport command is transmitted to the printer 100 through the communication unit 32 in step S220 and it is then determined in step S222 whether the transmission of the printing control command is ended. When it is determined that the transmission is ended (YES), a series of processes are ended and the original process is performed again.

On the other hand, when it is determined in step S222 that the transmission of the printing control command is not ended (NO), the process of step S222 is waited for until the transmission is ended.

On the other hand, when it is determined in step S218 that the drawing layer N is not greater than the drawing layer number M (NO), the process of step S206 is performed.

### D Processes of Printer

The processes performed by the printer 100 will be described now.

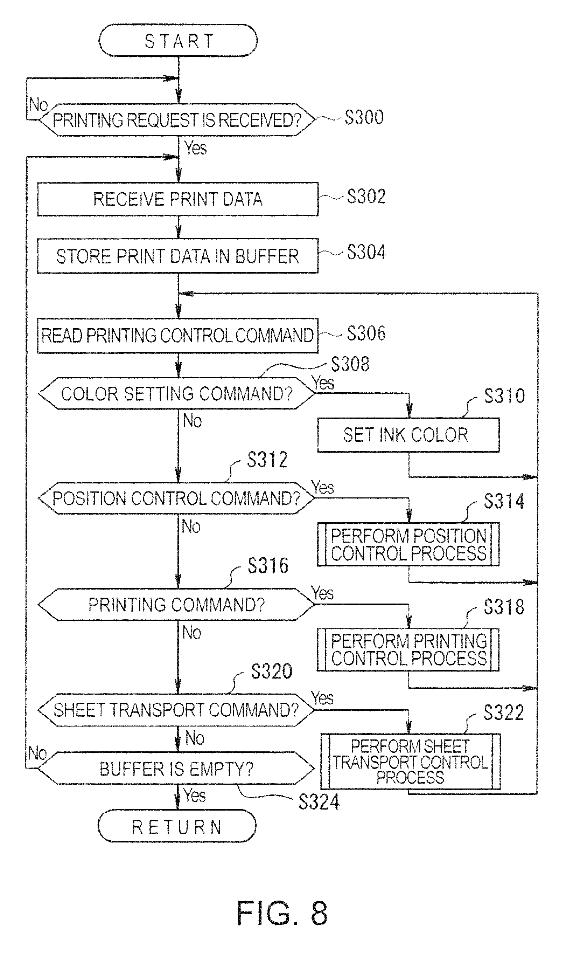

The CPU of the printing controller 10 includes a micro processing unit or the like, starts up a predetermined program stored in a predetermined area of the ROM, and performs the printing control process shown in the flowchart of Fig. 8 in accordance with the program.

Fig. 8 is a flowchart illustrating the printing control process.

When the printing control process is performed by the CPU of the printing controller 10, the process of step S300 is first performed as shown in Fig. 8.

In step S300, it is determined whether the printing request is received through the communication unit 12. When it is determined that the printing request is received (YES), the process of step S302 is performed. Otherwise (NO), the process of step S300 is waited for until the printing request is received.

The print data is received through the communication unit 12 in step S302, the received print data is stored in a buffer of the memory unit 14 in step S304, and then the process of step S306 is performed.

The printing control command is read from the buffer in step S306 and it is then determined in step S308 whether the read printing control command is the color setting command. When the read printing control command is the color setting command (YES), the process of step S31 0 is performed.

In step S310, the ink color is set on the basis of the read printing control command, and then the process of step S306 is performed.

On the other hand, when it is determined in step S308 that the read printing control command is not the color setting command (NO), it is determined in step S312 whether the read printing control command is the position control command. When it is determined that the read printing control command is the position control command (YES), the process of step S314 is performed.

In step S314, the position control process of controlling the position of the print head or the printing sheet is performed by controlling the carriage or the transport roller on the basis of the read printing control command and then the process of step S306 is performed. The position control process includes skipping a portion not having any printing image, returning a position point to the original position as an initial value, and controlling a position to obtain an effect substantially equivalent to the sheet transport with the movement of the carriage.

On the other hand, when it is determined in step S312 that the read printing control command is not the position control command (NO), it is determined in step S316 whether the read printing control command is the printing command. When it is determined that the read printing control command is the printing command (YES), the process of step S318 is performed.

In step S318, the printing control process of ejecting ink of the ink color set in step S310 is performed by controlling the print head on the basis of the read printing control command and then the process of step S306 is performed.

On the other hand, when it is determined in step S316 that the read printing control command is not the printing command (NO), it is determined in step S320 whether the read printing control command is the sheet transport command. When it is determined that the read printing control command is the sheet transport command (YES), the process of step S322 is performed.

In step S322, the sheet transport control process of discharging a printing sheet is performed by controlling the transport roller on the basis of the read printing control command and then the process of step S306 is performed.

On the other hand, when it is determined in step S320 that the read printing control command is not the sheet transport command (NO), it is determined in step S324 whether the buffer is empty. When it is determined that the buffer is empty (YES), a series of processes are ended and the original process is performed again.

On the other hand, when it is determined in step S324 that the buffer is not empty (NO), the process of step S302 is performed.

### E Printing Operation

An operation of this embodiment will be described now.

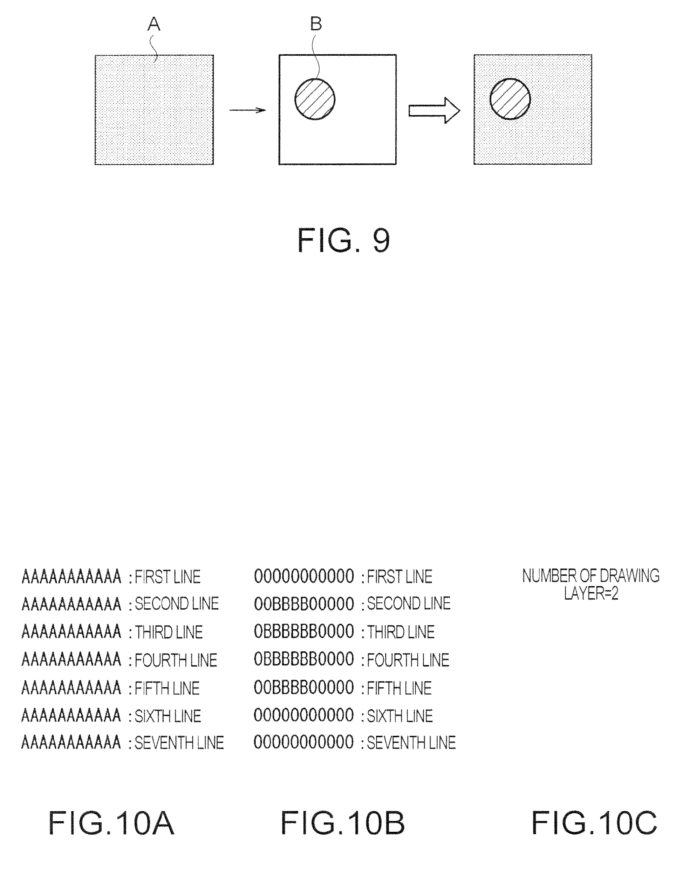

Fig. 9 is a diagram illustrating a case where a rectangle is first drawn and then a circle is drawn thereon.

In this embodiment, as shown in Fig. 9, the rectangle is drawn with color A and the circle is overwritten and drawn thereon with color B.

When the drawing data shown in Fig. 5 is prepared in the printing request terminal 200, the bit map data of each drawing layer is generated through steps S100 to S118 by the information processor 30, the bit map data is stored in the bit map storage area, and the drawing layer number M is stored in the drawing parameter storage area.

Figs. 10A to 10C are diagrams illustrating data structures of the bit map storage area and the drawing parameter storage area.

As a result, color information "A" for the respective pixels of the rectangle is stored in the bit map storage area of drawing layer 1 as shown in Fig. 10A and color information "B" of the respective pixels of the circle is stored in the bit map storage area of drawing layer 2 as shown in Fig. 10B. Color information "0" means that no pixel is formed. "2" as the drawing layer number M is stored in the drawing parameter storage area as shown in Fig. 10C.

In the printing request terminal 200, the print data is generated every drawing layer through steps S200 to S222 by the information processor 30 and the generated print data is sequentially transmitted to the printer 100.

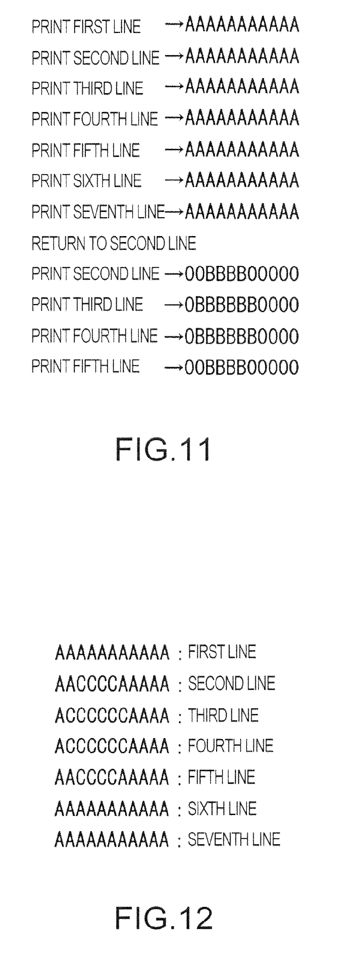

Fig. 11 is a diagram illustrating a printing order.

When the printer 100 receives the print data, the printing controller 10 controls the image forming unit 16 on the basis of the sequentially received print data through steps S300 to S324. As a result, as shown in Fig. 11, the rectangular image is formed from the first line to the seventh line with ink A, the printing sheet is returned to the second line, and the circular image is formed from the second line to the fifth line with ink B.

Fig. 12 is a diagram illustrating the printing result.

In the printing result, since ink A is first ejected to the portion in which the rectangle and the circle overlaps with each other and then ink B is ejected thereon as shown in Fig. 12, color C having an expression based on the specified order is obtained.

### F Ejection Order

The inventor found out that the expression of prints varies depending on the ink ejecting order when plural ink is ejected to form a single pixel, as the result of hard study. For example, the texture of prints varies between the case where specific color ink A is first ejected and ink B is then ejected thereon and the case where ink B is first ejected and specific color ink A is then ejected thereon. It is thought that this phenomenon similarly occurs when special ink is ejected.

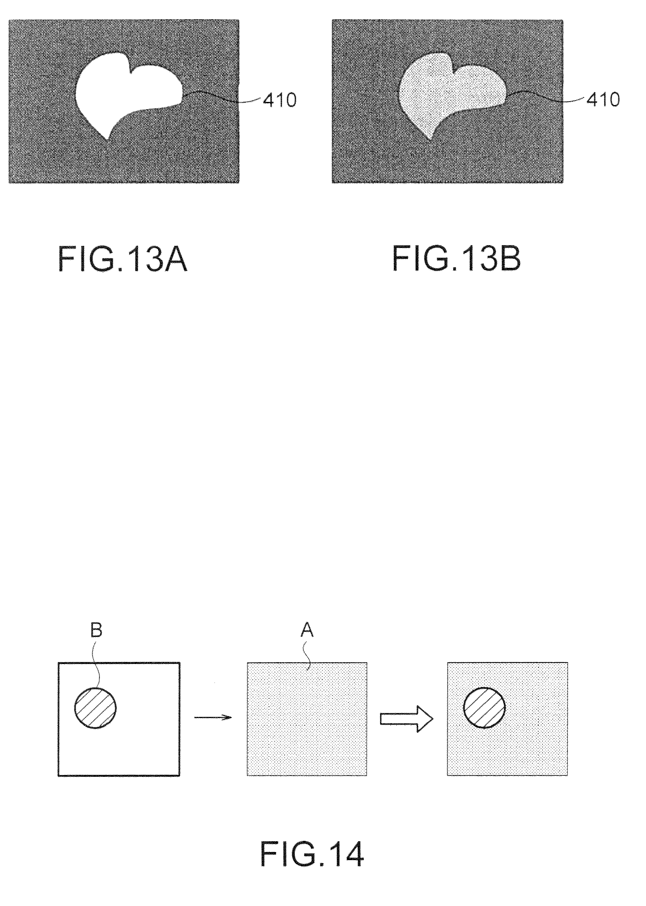

Figs. 13A and 13B are diagrams illustrating a difference in expression between prints.

Metallic ink is used as the special ink and dye color ink (CMY ink) is used as the primary color ink. The metallic ink has low osmosis into the printing sheet and a thickness greater than the color ink from the printing sheet. The dye color ink having a high light transmitting property may be printed on a transparent sheet to form an image on a transmissive OHP sheet or the like.

In method 1, the special ink is first ejected on a printing sheet and then the primary color ink is ejected thereon. In method 2, the special ink is first ejected on a printing sheet other than an area to which the primary color ink should be ejected and then the primary color ink is ejected thereon.

In the past, as shown in Fig. 13A, the metallic color and the primary color of a heart shape 410 was specified and were separately painted and printed on the basis of color information. That is, the image was formed by method 2. Accordingly, the overprinting of ink could be specified but the order of ejecting the ink could not be specified. On the contrary, in the invention, since the image is formed by method 1, the color expression having a light reflecting property based on the synergistic effect of the primary color and the metallic color can be made in the heart shape 410, as shown in Fig. 13B.

The expression of method 1 and the expression of method 2 are different in texture such as glossiness. Accordingly, by providing the structure for specifying the ink ejecting order, it is possible to widen the expression.

In this way, in this embodiment, by specifying the ink ejecting order and ejecting plural ink in the specified order to form a single pixel, a case of first ejecting ink A and then ejecting ink B thereon and a case of ejecting the ink in the opposite order can be embodied, thereby accomplishing more diverse expression of prints.

### Second Embodiment

A second embodiment of the invention will be described now.

Fig. 14 is a diagram illustrating a case where the circle is first drawn and then the rectangle is drawn thereon.

In this embodiment, as shown in Fig. 14, the circle is drawn with color B and then the rectangle is overwritten and drawn thereon with color A.

When the drawing data shown in Fig. 5 is prepared in the printing request terminal 200, the bit map data is generated every drawing layer, the bit map data is stored in the bit map storage area and the drawing layer number M is stored in the drawing parameter storage area.

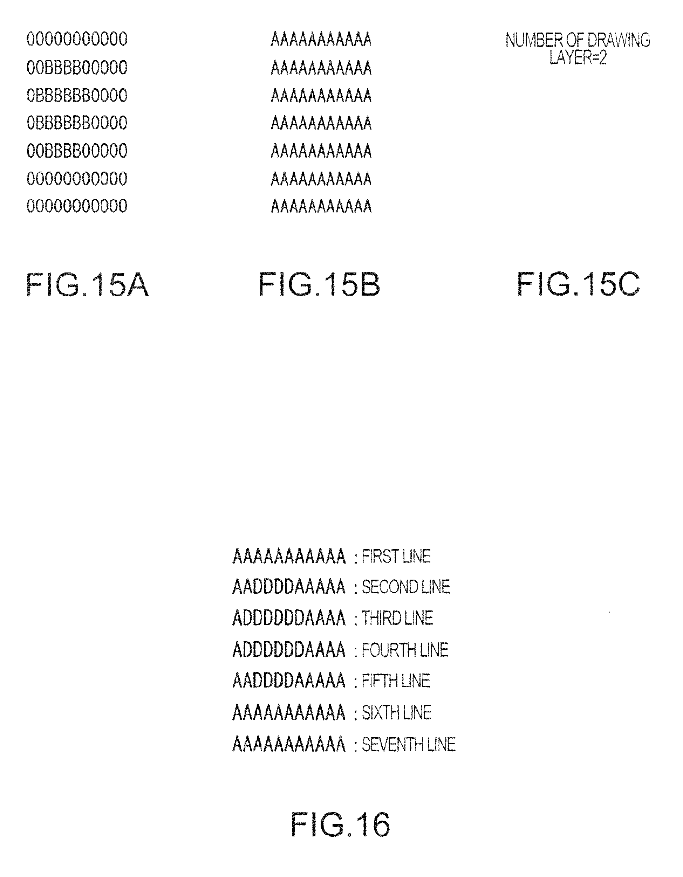

Figs. 15A, 15B, and 15C are diagrams illustrating data structures of the bit map storage area and the drawing parameter storage area.

As a result, color information "B" for the respective pixels of the circle is stored in the bit map storage area of drawing layer 1 as shown in Fig. 15A and color information "A" of the respective pixels of the rectangle is stored in the bit map storage area of drawing layer 2 as shown in Fig. 15B. "2" as the drawing layer number M is stored in the drawing parameter storage area as shown in Fig. 15C.

In the printing request terminal 200, the print data is generated every drawing layer and the print data is sequentially transmitted to the printer 100.

When the printer 100 receives the print data, the image forming unit 16 is controlled on the basis of the sequentially received print data to obtain the prints.

Fig. 16 is a diagram illustrating the printing result.

In the printing result, since ink B is first ejected to the portion in which the rectangle and the circle overlaps with each other and then ink A is ejected thereon as shown in Fig. 16, color D having an expression based on the specified order is obtained.

### Other Embodiments

The following modified examples can be considered in addition to the first and second embodiments.

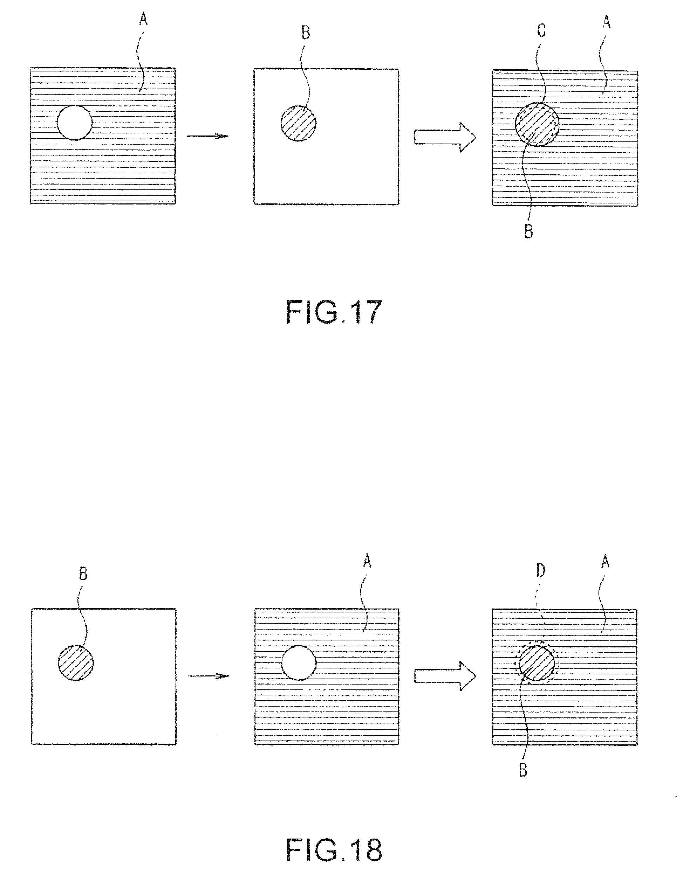

(1) Fig. 17 is a diagram illustrating a case where the rectangle other than the circle portion is first drawn and the circle is drawn thereon. In this case, color C is obtained in the boundary of the rectangle and the circle.

(2) Fig. 18 is a diagram illustrating a case where the circle is first drawn and then the rectangle other than the circle portion is drawn thereon. In this case, color D is obtained in the boundary of the rectangle and the circle.

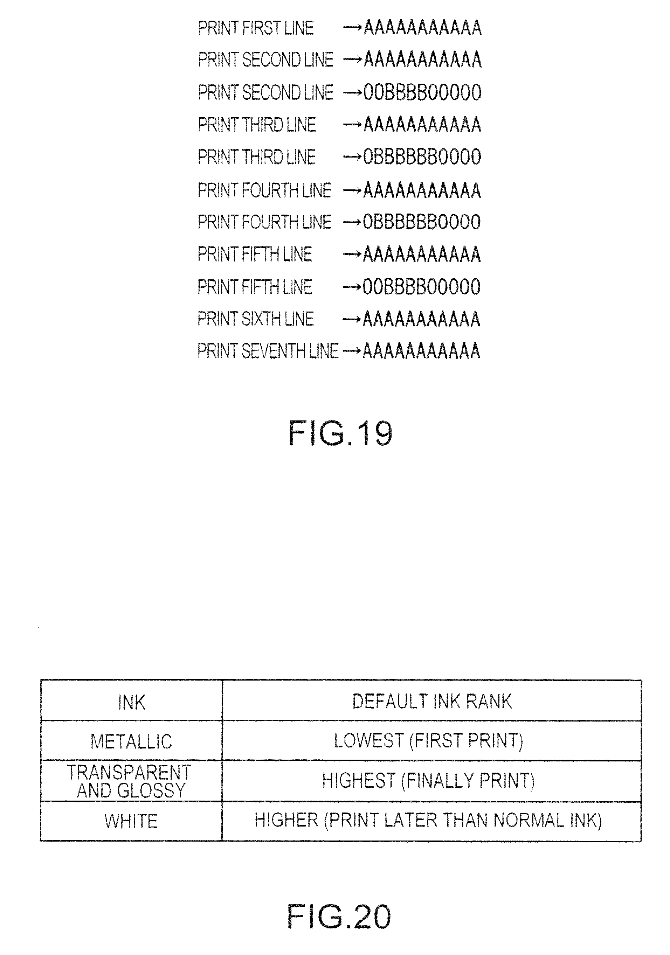

(3) Fig. 19 is a diagram illustrating a printing order.

As shown in Fig. 19, the rectangular image may be formed with ink A at the same time as forming the circular image with ink B.

(4) Fig. 20 is a diagram illustrating a table in which ranks of ejecting ink are defined.

In an application having no drawing layer, when an image is drawn by specifying specific color, it is effective as shown in Fig. 20 that the ranks of the ink can be set so that the order of ink suitable normally from the ink characteristics can become default.

When the ranks of ink are set manually, the ranks may be specified to intend a special effect. In this case, specifically, the expression can be changed by first or later printing white ink or gold ink, for example. Accordingly, the ranks of ink can be selected with effect titles such as "white base" and "gold base" resulting from the effects.

(5) When the number of drawing figures is 1, the rectangle is drawn with color A, and the circle is drawn with color B, a structure for specifying whether to always finally or first eject color B may be provided. By using an application drawing the drawing elements with the plural drawing layers, the rectangle is drawn with color A in drawing layer 1, the circle is drawn with color B in drawing layer 2, and the order may be specified with a command such as "print in the order of drawing layers", "print in the inverse order of drawing layers", or "overlap and print in the order of drawing layers."

(6) Although the ink ejecting order has been specified by an application, the invention is not limited to the configuration, but the ink ejecting order may be specified by the OS or the device driver. The invention does not limit the functions or relations of the application, the OS, and the device driver.

(7) The invention may be applied to printing on metal or cloth, as well as a printing sheet. The invention is effective in the field of ink jet applications such as forming wirings or objects by ink jet.

(8) The area not painted at the time of ejecting color A may be adjusted so that the area not painted at the time of ejecting color A is gradually narrowed or widened on the basis of the overwriting drawing command of color A and color B. When the ink of color B has a higher overwriting property, it becomes difficult to form a non-printed area between color A and color B by gradually narrowing the area not painted at the time of ejecting color A. When a printing operation is performed on cloth or the like and the impurity of color resulting from the mixture of color A and color B causes a problem at the time of transmitting light, that is, when it is preferable that the ink gap is slightly separated, the area not painted at the time of ejecting color A may be preferably widened gradually.

(9) It can be considered that the standard is specified when the parameter of the overwriting drawing command is "no parameter". In this case, the ambient color is ejected widely and the space for ejection of a next color is narrowed to 98% in case of "PreSpace98" or 97% in the case of "PreSpace97".

As the effect of (8) and (9), the soaking or impurity of ink can be prevented by minutely widening the space between the overwriting ink and the base ink. Even when the printed medium is lit for viewing, an outline having low brightness is not formed between ink having different colors to obtain a clear print. When plural color ink is printed, the overlapping area may be varied. Accordingly, when it is intended not to overlap with each other, the safe order can be specified using a space specifying function such as "PreSpace??".

(10) Although the printer has been exemplified in which the print head ejecting ink onto a printing sheet reciprocates in the direction perpendicular to the transport direction of the printing sheet, the invention may be applied to a line head printer in which plural print heads are arranged in the direction perpendicular to the transport direction of the printing sheet and a printing operation is performed without moving the print heads.

The foregoing description has been given by way of example only and it will be appreciated by a person skilled in the art that modifications can be made without departing from the scope of the present invention.

## Claims

1. A printing control system for controlling a printer (100) performing a printing operation by ejecting a plurality of inks including a specific color ink or special ink, the printing control system comprising:
an ejection order specifying section arranged to specify an order of ejecting the inks when the plurality of inks including the specific color ink or the special ink is ejected to perform the printing operation;
a print data generating section arranged to generate print data for controlling the ejection of the ink of every rank on the basis of the order specified by the ejection order specifying section; and
a printing control section arranged to allow the plurality of inks to be ejected in the order specified by the ejection order specifying section by sequentially controlling the printer on the basis of the print data sequentially acquired from the first rank among the print data of all the ranks generated by the print data generating section,
wherein the ejection order specifying section is arranged to specify the order of ejecting based on input by the user.

2. The printing control system according to claim 1, comprising a printing request terminal (200) for requesting the printer to perform the printing operation,
wherein the printing request terminal has a program allowing the printing request terminal to perform the function of the ejection order specifying section.

3. The printing control system according to claim 1 or claim 2, further comprising an ejection rank information storing section arranged to store ejection rank information indicating a rank for ejecting a predetermined ink of the plurality of inks,
wherein the ejection order specifying section specifies the ink ejection order on the basis of the ejection rank information stored in the ejection rank information storing section.

4. The printing control system according to any one of the preceding claims, wherein the ejection order specifying section is arranged to specify the order of ejecting the plurality of inks on the basis of drawing elements to be printed.

5. The printing control system according to any one of claims 1 to 3, wherein the ejection order specifying section is arranged to specify the order of ejecting the plurality of inks on the basis of drawing layers used for printing.

6. A printing request terminal for requesting a printer to perform a printing operation, the printing request terminal comprising:
an ejection order specifying section arranged to specify an order of ejecting a plurality of inks when the printer performs the printing operation by ejecting the plurality of ink including specific color ink or special ink;
a print data generating section arranged to generate print data for controlling the ejection of the plurality of inks of every rank on the basis of the order specified by the ejection order specifying section; and
a print data transmitting section arranged to transmit the print data generated by the print data generating section to the printer,
wherein the ejection order specifying section is arranged to specify the order of ejecting based on input by the user.

7. A printer for performing a printing operation in response to a print request from a printing request terminal, the printer comprising:
a printing section arranged to perform a printing operation by ejecting a plurality of inks;
a print data receiving section arranged to receive print data from the printing request terminal; and
a printing control section arranged to control the printing section to eject the plurality of ink in a predetermined order on the basis of the print data received by the print data receiving section,
wherein the print data serves to control the ejection of the plurality of inks of every rank on the basis of the specification of the order of ejecting the plurality of ink, and
the order of ejecting is based on input by the user.

8. A printing control method of controlling a printer performing a printing operation by ejecting a plurality of inks including a specific color ink or special ink, the printing control method comprising:
specifying an order of ejecting the inks when the plurality of inks including the specific color ink or the special ink is ejected to perform the printing operation;
generating print data for controlling the ejection of the inks of every rank on the basis of the specified order; and
ejecting the plurality of inks in the specified order by sequentially controlling the printer on the basis of the print data sequentially acquired from the first rank among the generated print data of all the ranks,
wherein specifying of the ejection order section is based on input by the user.

9. A printing control program for controlling a printer performing a printing operation by ejecting a plurality of inks including a specific color ink or special ink, the printing control program allowing a computer to execute a process including:
specifying an order of ejecting the inks when the plurality of inks including the specific color ink or the special ink is ejected to perform the printing operation;
generating print data for controlling the ejection of the inks of every rank on the basis of the specified order; and
ejecting the plurality of inks in the specified order by sequentially controlling the printer on the basis of the print data sequentially acquired from the first rank among the generated print data of all the ranks,
wherein specifying of the ejection order section is based on input by the user.

10. A printing control system for controlling a printer performing a printing operation by ejecting a plurality of recording materials, the printing control system comprising:
an ejection order specifying section specifying an order of ejecting the recording materials at the time of performing a printing operation by ejecting the plurality of recording materials; and
a printing control section controlling the printer to eject the plurality of recording materials in the order specified by the ejection order specifying section on the basis of the order specified by the ejection order specifying section,
wherein the ejection order specifying section is arranged to specify the order of ejecting based on input by the user.
